# EUROPÄISCHE PATENTSCHRIFT

(11) **EP 0 582 678 B1**
(45) Veröffentlichungstag und Bekanntmachung des Hinweises auf die Patenterteilung: **03.01.1996**
(21) Anmeldenummer: 92913471.6
(22) Anmeldetag: 27.06.1992
(51) Int. Cl.: D06C 3/06

(54) **BREITDEHNVORRICHTUNG**
WIDTH EXPANDING DEVICE
DISPOSITIF D'EXTENSION EN LARGEUR

(30) Priorität: 04.07.1991 DE 4122121
(43) Veröffentlichungstag der Anmeldung: 16.02.1994
(73) Patentinhaber: Eduard Küsters Maschinenfabrik GmbH & Co. KG, D-47805 Krefeld (DE)
(72) Erfinder: KURSCHATKE, Wolfgang, D-4150 Krefeld (DE); SCHNEIDER, Axel, D-4150 Krefeld (DE); VON HARTEN, Günter, D-4044 Kaarst (DE); MEYER, Christian, D-4060 Viersen-Dülken (DE); KADAGIES, Klaus, D-4150 Krefeld 1 (DE)
(74) Vertreter: Palgen, Peter, Dr. Dipl.-Phys.
(86) Internationale Anmeldenummer: DE9200533
(87) Internationale Veröffentlichungsnummer: WO9301344

(56) Entgegenhaltungen:
- GB-A- 1 140 030
- GB-A- 1 149 746
- GB-A- 2 093 490
- US-A- 3 499 185
- US-A- 3 652 002
- US-A- 4 368 565

## Beschreibung

Aus der DE-PS 30 067 ist eine Breitdehnvorrichtung bekannt, bei der eine textile Warenbahn von einer Rolle abgewickelt, durch den Spalt zwischen zusammenwirkenden Profilwalzen hindurchgeleitet und anschließend wieder aufgewickelt wird. Vor und hinter dem Spalt kann eine Breitstreckvorrichtung vorgesehen sein. Die zusammenwirkenden Walzen besitzen am Umfang ein schraubenförmiges Relief, welches von der Mitte der Walzen aus nach den beiden Seiten hin jeweils mit gleichbleibender Steigung verläuft, aber auf den beiden Seiten entgegengesetzt angeordnet ist. Dieses Relief kämmt mit einem entsprechenden Relief der Gegenwalze, wobei die Scheitel des Reliefs der einen Walze in die Täler zwischen den Scheiteln des Reliefs der anderen Walze mehr oder weniger eintreten. Die beiden Walzen können gesteuert gegeneinander angestellt werden.

Für die Zwecke der nachfolgenden Beschreibung wird eine Querreckung als Breitdehnung bezeichnet, was also eine Dimensionsänderung der Warenbahn in Breitenrichtung beinhalten soll und mit der Ausübung erheblicher Reckzugkräfte in Breitenrichtung auf das Material einhergeht, im Gegensatz zur Breitstreckung, bei der nur relativ geringe Kräfte in Breitenrichtung auf die Warenbahn ausgeübt werden und eine nicht völlig flachliegende Warenbahn lediglich in den ebenen Zustand ausgebreitet wird.

Die in diesem Sinne vorhandene Breitdehnwirkung der bekannten Vorrichtung beruht darauf, daß die Warenbahn, die normalerweise in ebenem Zustand den Walzspalt durchlaufen würde, durch die Scheitel der einen Walze in die Täler zwischen den Scheiteln der anderen Walze hineingedrückt wird. Dabei wird sie durch die Reibung an den Nachbarscheiteln festgehalten, so daß dem Eindringen eine Gegenkraft entgegensteht, die zu einer Dehnung führt. Die Warenbahn verläuft bei nur unwesentlich veränderter Lage der Ränder in dem Walzspalt im Zickzack, wozu natürlich eine größere Erstreckung der Warenbahn in Breitenrichtung notwendig ist. Es erfolgt also eine Querreckung der Warenbahn. Das Maß der Querreckung hängt davon ab, wie weit die Schraubenreliefs der beiden zusammenwirkenden Walzen ineinander eingreifen. Bei tiefem Eingriff kann durchaus erreicht werden, daß die Warenbahn in Längsstreifen zerrissen wird.

Die mit der bekannten Vorrichtung angestrebte Wirkung beruht in einer Vergleichmäßigung der lokal erreichbaren Breitdehnung über die Breite der Warenbahn. Eine andere Breitdehnvorrichtung ist der Spannrahmen, in welchem die Kluppen am Rande der Warenbahn angreifen und diese auseinanderziehen. Dabei stellt sich jedoch ein näherungsweise hyperbelförmiger Dehnungsverlauf über die Breite ein. Die Dehnung am Rand ist stärker und die Kettzahldichte der fertigen Ware dort deutlich geringer. Diese Unterschiede machen sich auch im Behandlungsausfall, z.B. der Farbtontiefe, bemerkbar.

Bei der Breitdehnung auf der aus der DE-PS 30 067 bekannten Vorrichtung erfolgt die Dehnung an einer Vielzahl von über die Warenbahnbreite gleichmäßig verteilten Stellen zwischen je zwei größenordnungsmäßig 1 bis 2 cm voneinander entfernten Scheiteln. Die Kräfte werden nicht an weit entfernten Stellen, sondern in der unmittelbaren Nachbarschaft der jeweils betrachteten Stelle eingeleitet. Die verhältnisse sind jedenfalls im Innern der Warenbahn an allen Stellen gleich. Entsprechend ist auch die erzielte Dehnung konstant. Die Krafteinleitungsstellen werden wesentlich weniger strapaziert als beim Spannrahmen, denn es gibt nicht nur zwei am Rand der Warenbahn, sondern größenordnungsmäßig etwa hundert, die entlang einer Linie in dem Dehnspalt aufeinanderfolgen.

Die DE-PS 30 067 stammt aus dem Jahre 1884. Zwischenzeitlich hat die mit der Vorrichtung ausübbare Wirkung in Gestalt des sogenannten ML-(Mikrolängungs-)Verfahrens (Z. Textilbetrieb 95 (1977), Seiten 58 bis 60) eine neue Aktualität erfahren. Diese stand unter dem Gesichtspunkt des Breitengewinns an der Ware ohne Längeneinbuße bzw. der Erhaltung einer bestimmten Breite, um dem Schrumpfen bei den verschiedenen textilen Naßbehandlungsprozessen entgegenzuwirken. Die Folge sollte ein Flächengewinn der fertig hochveredelten Ware von einigen Prozent sein. Das ML-Verfahren wurde auf einer Vorrichtung durchgeführt, die im wesentlichen der der DE-PS 30 067 entsprach.

Trotz des erstrebenswerten Ziels, einige Prozent an Warenfläche zusätzlich nutzen zu können, womit erhebliche Investitionen gerechtfertigt gewesen wären, hat sich das ML-Verfahren in der Praxis nicht durchsetzen können. Der Grund bestand darin, daß die Ware zwar im Innern der Warenbahnbreite in der erstrebten Weise gleichmäßig gedehnt werden konnte, daß dieser Effekt aber am Rande nicht aufrechtzuerhalten war, weil die Warenbahn dort beim Auftreten der Dehnzugspannungen von der Seite her in den Dehnspalt hineingezogen wurde, weil den Zugspannungen am Rande keine Gegenkräfte entgegengesetzt werden konnten. Die mit der bekannten Vorrichtung erzielbare Dehnung hatte somit die Gestalt einer zur Mitte symmetrischen Kurve, die an den Rändern abfiel. Diese Ungleichmäßigkeit der Dehnung machte sich im Behandlungsausfall so bemerkbar, daß die Ware höheren Ansprüchen nicht zu genügen vermochte.

Es wurde versucht, die Ware am Rand besonders festzuhalten, indem in die Täler des Reliefs der einen Walze elastische Ringe eingelegt wurden, gegen die die Scheitel des Reliefs der anderen, den Dehnspalt bildenden Walze zur Anlage kamen. Die Ware wurde auf diese Weise am Rande festgeklemmt und konnte nicht nach innen rutschen. Die genannte Hilfsmaßnahme war aber immer nur für eine Warenbahnbreite geeignet, und es bedeutete die Anbringung und auch die Versetzung der elastischen Ringe einen erheblichen Arbeitsaufwand.

An der dem Oberbegriff zugrundeliegenden DE-AS 26 13 822 ist eine Breitdehnvorrichtung bekannt, bei der eine glatte zylindrische Andrückwalze auf den Scheiteln des Reliefs der einen Walze, über die die Warenbahn einläuft, in dem von der Warenbahn bedeckten Teil der Walze von außen anliegt und die Warenbahn an einer Vielzahl von über die Warenbahnbreite verteilten Stellen, insbesondere auch am Rande, zwischen sich und den Scheiteln einklemmt. Die Scheitel haben die gleiche radiale Höhe, von der Walzenachse aus gemessen. Dadurch ergibt sich über die Warenbahnbreite eine Vielzahl von Fix- oder Festhaltepunkten, an denen sich die Warenbahn in Breitenrichtung nicht verlagern kann. Diese Fix- oder Festhaltepunkte sind in möglichster Nähe des Dehnspalts gelegen. Wenn also die Warenbahn in den Dehnspalt einläuft, kann sie am Rand nur in sehr beschränktem Maß den durch den Eingriff der Reliefs auftretenden Querzugkräften folgen und wird daran gehindert, von den Seiten her in den Dehnspalt hineinzurutschen. Auf diese Weise wird die durch den Eingriff der Reliefs der zusammenwirkenden Walzen erzeugte Dehnwirkung über die Breite vergleichmäßigt und insbesondere auch am Rande aufrechterhalten. Die Andrückwalze, die natürlich etwa die gleiche Länge hat wie die zusammenwirkenden Reliefwalzen, bringt also die Fähigkeit der zusammenwirkenden Reliefwalzen zur Erzeugung einer "Mikrolängung" in Querrichtung der Warenbahn erst zu einer brauchbaren Wirkung. Diese Wirkung tritt bei unterschiedlichen Breiten der verarbeiteten Warenbahn ein, ohne daß es insoweit irgendwelcher Anpassungsmaßnahmen bedarf.

In der US-A-4 368 565 ist ein ähnlicher Stand der Technik beschrieben. Zwei Rillenwalzen greifen ineinander. Die Vorrichtung soll zum Querstrecken von orientierbaren Kunststoffolien dienen. Es wird die Gefahr angesprochen, daß bei Verformungen der Walzen die Flanken der Rillen einander annähern und die Folienbahn zerdrücken können. Um dieser Gefahr zu entgehen, sind die beiden Walzen aus lose aufgereihten Scheiben aufgebaut, die beim Auftreten von axialen Kräften axial etwas nachgeben können.

Nachdem die Gleichmäßigkeit der Dehnung bei zwei Walzenaggregaten nach der DE-AS 26 13 822 und der US-A-4 368 565 durch die dort vorhandenen Andrückwalzen wesentlich gesteigert werden konnte, verbleibt ein Problem, welches schon angesprochen wurde und damit zu tun hat, daß das Material der Warenbahn, wenn die erwünschte Dehnung in einem Schritt ausgeführt wird, einer erheblichen Beanspruchung bis an die Grenze der Reißfestigkeit unterliegt.

Der Erfindung liegt die Aufgabe zugrunde, die gattungsgemäße Breitdehnvorrichtung so auszugestalten, daß die Breitdehnvorrichtung auf die Warenbahn schonender ausgeübt wird.

Diese Aufgabe wird durch die in Anspruch 1 wiedergegebene Erfindung gelöst.

Bei einer solchen Anordnung sind zwei Dehnspalte vorhanden und kann die erwünschte Gesamtdehung ohne großen Zusatzaufwand in zwei Stufen herbeigeführt werden, wobei zwischen den beiden Stufen eine Art mechanischer Erholung der Warenbahn stattfinden kann, besonders wenn die Warenbahn in diesem Abschnitt durch ein Flüssigkeitsbad läuft. Die Erfindung erlaubt also eine über die Breite der Warenbahn gleichmäßige Dehnung, ohne die Warenbahn über Gebühr zu strapazieren. Es hat sich gezeigt, daß mit der Erfindung die Penetratin flüssiger oder auch gasförmiger Substanzen in die Ware und in das Innere der Fasern und Filamente verbessert werden kann, wobei eine Dehnung vor, während oder nach der Beaufschlagung mit den Substanzen eine Wirkung bringen kann.

Gemäß Anspruch 2 kann das Andrückelement eine glatte Andrückfläche aufweisen. Diese Ausführungsform ist am leichtesten herstellbar und erzeugt, wenn die Erhöhungen des Reliefs der zusammenwirkenden Walzen in einer Zylinderfläche liegen, eine gleichmäßige Andrückwirkung.

Der Zufuhr oder Abfuhr eines Behandlungsmediums bei der Breitdehnung kann eine Perforierung nach Anspruch 3 dienen.

Eln Andrückelement, welches diese Funktion im wesentlichen friktionsfrei ausüben kann, kann verschiedene geometrische Gestalt aufweisen.

Die bevorzugte Ausführungsform ist die einer Andrückwalze nach Anspruch 4. Eine solche Andrückwalze ergibt eine lineare oder jedenfalls sehr schmale, sich längs der Andrückwalze erstreckende Andrückzone.

Um die Andrückung und die Haltewirkung zu vergleichmässigen, empfiehlt es sich, auf der Andrückwalze einen nachgiebigen Belag mit einer Härte von etwa 50 bis 70 Shore D anzubringen (Anspruch 6).

Im allgemeinen wird die Andrückwalze als in sich starre zylindrische Walze üblicher Art ausgebildet sein. Das setzt allerdings die Anordnung der Erhöhungen des Reliefs der Gegenwalze in einer zylindrischen Fläche voraus, was nicht immer gegeben ist.

Es kann sich in solchen Fällen die Ausbildung der Andrückwalze nach Art einer Breitstreckwalze gemäß Anspruch 6 empfehlen.

Eine alternative Ausführungsform, bei der der Andrückbereich nicht im wesentlichen linear ist, sondern sich über einen größeren Umfangswinkel erstreckt, umfaßt die Ausbildung des Andrückelements als endlos umlaufendes Band gemäß Anspruch 7.

Dieses Band kann außer einem vergrößerten Andrückbereich, der eine wirkungsvollere Fixierung der Warenbahn in Querrichtung ergibt, auch noch Vorteile insofern aufweisen, als die Warenbahn in dem Andrückbereich geschlossen hinterlagert ist. Dies kann für bestimmte Behandlungen mit einem fluiden Behandlungsmedium während der Breitdehnung von Vorteil sein. Es ist aber nicht zwingend, daß das Band eine geschlossene Oberfläche aufweist; es kann ebenso wie die Andrückwalze seinerseits ein gewisses Oberflächenrelief tragen und auch perforiert sein.

In einer ersten Ausführungsform weisen die Profilwalze und die Gegenwalze ein Relief mit über den Umfang durchgehenden Rippen auf (Anspruch 8).

Die Breitdehnvorrichtung wird zwar auch von in zur Achse senkrechten Ebenen verlaufenden Rippen erzielt, doch besteht dabei in der Praxis die Gefahr von Längsmarkierungen auf der Warenbahn. Vorzuziehen ist daher die Ausbildung des Reliefs als Schraubenrelief, welches als durchgehendes Schraubenrelief ausgebildet sein kann, wobei keine Quertransportwirkung auftritt, aber die Markierung unterdrückt ist. Es ist aber auch möglich, ein Schraubenrelief wie bei der DE-PS 30 067 zu wählen, bei welchem die Schraubengänge von der Mitte aus mit einander entgegengesetzter, jedoch gleichgroßer Steigung verlaufen.

Die in Betracht kommenden Reliefs sind aber nicht auf über den Umfang durchgehende Rippenreliefs beschränkt, sondern kommen gemäß Anspruch 9 auch als Reliefs aus einzelnen Noppen oder Rauten in Betracht.

Überhaupt ist die Ausbildung der Reliefs nur dadurch beschränkt, daß sie die Breitdehnwirkung erzeugen können müssen und einen gegenseitigen Eingriff beim Umlauf ohne Flankenberührung gestatten.

Die in der Praxis brauchbaren Dimensionierungen der Reliefs sind in den Ansprüchen 10 und 11 wiedergegeben. Die Abmessungen sind auf die üblichen Abmessungen von gewebten textilen Warenbahnen zu beziehen, die bis etwa 2 m Warenbahnbreite gehen.

Damit an den Kanten der Erhöhungen, über die die Warenbahn ja unter Spannung zwischen die Erhöhungen hineingezogen wird, keine zu starke Reibungs- oder gar Schnittbeanspruchung der Warenbahn eintritt, empfiehlt es sich, die Scheitel der Erhöhungen abzurunden.

Verschiedenartige textile Warenbahnen setzen der Behandlung in dem Dehnspalt unterschiedlichen Widerstand entgegen. Einige dieser Warenbahnen setzen trotz der bereits erreichten Vergleichmäßigung der lokalen Dehnung über die Warenbahnbreite mittels der Andrückwalze einer wirkungsvollen Dehnung so hohe Gegenkräfte entgegen, daß sich immer noch ein gewisser Abfall der Dehnung zum Rande hin bemerkbar macht.

Eine Ausgestaltung der Erfindung für solche Fälle, die auch ohne eine Andrückwalze eine Bedeutung haben kann, sieht gemäß Anspruch 12 vor, daß bei zusammenwirkenden Walzen die Eingriffstiefe der Erhöhungen und Vertiefungen der zusammenwirkenden Walzen von der Mitte nach den Seiten hin abnimmt, so daß an den Seiten ein weniger tiefer Eingriff und dementsprechend eine geringere Querreckung der Bahn stattfindet und dem sonst zu findenden hyperbelförmigen Verlauf entgegengewirkt wird. Das Maß der Abnahme der Scheitelhöhe und ihrer Verteilung über die Warenbahnbreite bestimmt sich im Einzelfall nach den Eigenschaften der zu verarbeitenden Materialien. Wenn eine Andrückwalze vorhanden ist und wenn der Außenumfang der Profilwalze nicht zylindrisch ist, muß die Andrückwalze sich der Gestalt der Profilwalze anpassen können.

Die Ausführung im einzelnen kann in der in Anspruch 13 wiedergegebenen Weise getroffen sein.

Eine wichtige Ausgestaltung der Erfindung besteht gemäß Anspruch 14 in einer in der Nähe des Dehnspalts angeordneten Einrichtung zum Aufbringen eines fluiden Behandlungsmediums auf die Warenbahn, vorzugsweise vor deren Einlauf in den Dehnspalt. Mittels des Behandlungsmediums kann der Dehnvorgang positiv beeinflußt werden. Als Behandlungsmedium kommen Wasser oder ein alkalisches Fluid in Betracht, die in einer Menge von 50 bis 300 % des Trockengewichts der Ware bei bei Temperaturen von 15°C bis 100°C, vorzugsweise ca. 80°C aufgetragen werden.

Die Saugvorrichtung nach Anspruch 15 dient zur Verteilung eines aufgesprühten oder anderweitig aufgebrachten Behandlungsmediums über die Dickenerstreckung der Warenbahn.

Diese Saugeinrichtung kann an einer der den Dehnspalt bildenden Walzen selbst verwirklicht werden, indem diese perforiert und mit einer Saugeinrichtung versehen wird (Anspruch 17). Es kann aber auch eine dieser Walzen zum Ausblasen eines gasförmigen oder flüssigen Behandlungsmediums eingerichtet sein.

Es können auch zwei solcher Walzen im Dehnspalt miteinander kombiniert werden, wobei die eine Walze zum Ausblasen, die andere Walze zum Einsaugen eines fluiden Behandlungsmediums ausgebildet ist (Anspruch 17). Es erfolgt hierbei eine intensive Durchströmung der Warenbahn im Augenblick der Breitdehnung.

Zur Vermeidung von Bogenverzug der Warenbahn ist bei Profil- und Gegenwalzen mit einem Relief aus schraubenförmigen Rippen eine Bemessung der Umschlingungswinkel nach Anspruch 18 ratsam.

Eine wichtige weitere Möglichkeit, die Breitdehnung mit einer Flüssigkeitsbehandlung zu kombinieren, ist Gegenstand des Anspruchs 19.

Durch das Eintauchen der Profilwalze erfährt auch die um diese herumgeführte Warenbahn bei oder nach dem Passieren des Dehnspaltes eine zusätzliche Flüssigkeitstränkung, die der Behandlung durch die Flüssigkeit bzw. der Erholung der Warenbahn zwischen dem aufeinanderfolgenden Dehnungen förderlich ist.

Die zusammenwirkenden Walzen sind gegeneinander anstellbar. Die einfachste Möglichkeit ist, die Walzen zum Beispiel mittels an den Enden angreifender Spindeltriebe auf eine bestimmte Eingriffstiefe fest einzustellen (Anspruch 20). So kann ein Anwender, der seine Artikelpalette genau kennt, fahren, wenn er weiß, welche maximale Schußfadenspannung die von Ihm verarbeitete Ware verträgt. Der Arbeitspunkt kann somit fest gewählt werden, wobei die Spannung natürlich in einem sicheren Abstand unterhalb des Punktes liegt, an dem Schädigungen auftreten.

Ein besseres Eingehen auf die Eigenschaften der Ware und auch eine größere Sicherheit vor deren Zerreißen bietet die Alternative, daß die Walzen auf eine bestimmte Eingriffskraft regelbar sind (Anspruch 21).

In diesem Fall bestimmt dann die Warenbahn selbst die Eindringtiefe der Reliefs im Dehnspalt und auch die sich einstellende Breitdehnung. Anstatt hierbei den Sollwert für die Kraftregelung extern, zum Beispiel aus Erfahrungswerten, vorzugeben, kann ein Rechner vorgesehen sein, der den Kraftdehnungsverlauf bei der Steigerung der Kraft an einer bestimmten Ware analysiert. Beginnt die Ware zu zerreißen, d.h. steigt die Kraft nicht mehr im gleichen Maße wie im "elastischen" Bereich dehnungsproportional an, so ist ein Grenzwert erreicht und gibt der Rechner einen mit einem Sicherheitsabstand daruntergelegenen Sollwert für den Regler vor. Auf diese Weise kann eine vollautomatische, genau auf die Eigenschaften der einzelnen Ware abgestellte Dehnung ohne Risiken eingestellt werden.

Um die Arbeitsweise zu automatisieren, kann sich eine Partieerkennungseinrichtung empfehlen, die auf Kennzeichnungen am Anfang und/oder Ende eines Bahnabschnitts, d.h. des Vorläufers, einer Partie oder des Nachläufers anspricht und die jeweils erforderliche Einstellung der Dehnspalte, d.h. Zustellung oder Schnellüften, selbsttätig in die Wege leitet.

Da ein wesentlicher Gesichtspunkt der Erfindung der Flächengewinn durch die Breitdehnung ist, besteht eine wichtige Ausgestaltung gemäß Anspruch 23 darin, die Arbeit der Breitdehnvorrichtung in Abhängigkeit von der erzielten Breite der Bahn zu regeln. Dazu wird die erreichte Breite fortlaufend gemessen und die Breitdehnung entsprechend eingestellt.

Nach dem Verlassen des letzten Dehnspaltes hat die Warenbahn eine Art Wellblechstruktur mit in Längsrichtung verlaufneden Scheiteln und Tälern. Damit es bei der weiteren Behandlung in einer Kontinue-Anlage keine Laufschwierigkeiten der Warenbahn mit Faltenbildung gibt, empfiehlt es sich, der Breitdehnvorrichtung eine Breitstreckvorrichtung unmittelbar nachzuschalten, die die Warenbahn in eine ebene Breitlage auseinanderführt (Anspruch 24).

Die erfindungsgemäße Breitdehnvorrichtung kann an verschiedenen Stellen einer Kontinue-Anlage eingesetzt werden. Beispiele hierfür sind in den Ansprüchen 25 bis 27 wiedergegeben.

In der Zeichnung sind Ausführungsbeispiele der Erfindung schematisch wiedergegeben.
Fig. 1 zeigt eine Seitenansicht einer Breitdehnvorrichtung mit zwei Dehnspalten;
Fig. 2 zeigt eine Ansicht des Paars zusammenwirkender Walzen mit Schraubenrelief gemäß Fig. 1 von links unten;
Fig. 3 zeigt eine entsprechende Ansicht einer anderen Ausführungsform;
Fig. 4 zeigt einen Teilschnitt in einer durch die Achsen der zusammenwirkenden Reliefwalzen gehenden Ebene im Eingriffsbereich;
Fig. 5 und 6 zeigen entsprechende Teilschnitte durch einzelne Schraubengänge bei verschiedem tiefem Eingriff;
Fig. 7 zeigt einen entsprechenden Teilschnitt mit einer anderen Querschnittsgestalt der Schraubengänge;
Fig. 8 bis 10 zeigen Beispiele für Walzen, die statt mit einem Schraubenrelief mit anderen Erhöhungen versehen sind;
Fig. 11 zeigt eine Fig. 1 entsprechende Ansicht, bei welcher die Vorrichtung durch Sprühvorrichtungen erweitert ist;
Fig. 12 illustriert den Dehnungsverlauf bei über die Breite gleichmäßiger Eingriffstiefe;
Fig. 13 illustriert den Dehnungsverlauf bei über die Breite unterschiedlicher Eingriffstiefe;
Fig. 14 deutet in einem durch die Achse gehenden Längsschnitt das Schraubenrelief bei einer Ausführungsform nach Fig. 13 an;
Fig. 15 ist eine Schnittansicht entsprechend Fig. 1 durch eine Ausführungsform der Breitdehnvorrichtung mit perforierten Walzen;
Fig. 16 ist eine vergrößerte Wiedergabe des Eingriffsbereichs der beiden Walzen nach Fig. 15;
Fig. 17 ist eine Ansicht von außen des Reliefs der Walze nach Fig. 16 in vergrößertem Maßstab;
Fig. 18 ist ein durch die Achse gehender Längsschnitt durch einen Umfangsbereich einer der Walzen;
Fig. 19 ist eine perspektivische Ansicht einer Breitensteuervorrichtung nach der Erfindung;
Fig. 20 ist eine Fig. 1 entsprechende Ansicht einer Ausführungsform mit einem bandförmigen Andrückelement;
Fig. 21 bis 23 geben Anwendungsbeispiele der Breitdehnvorrichtung innerhalb einer Behandlungsanlage wieder.

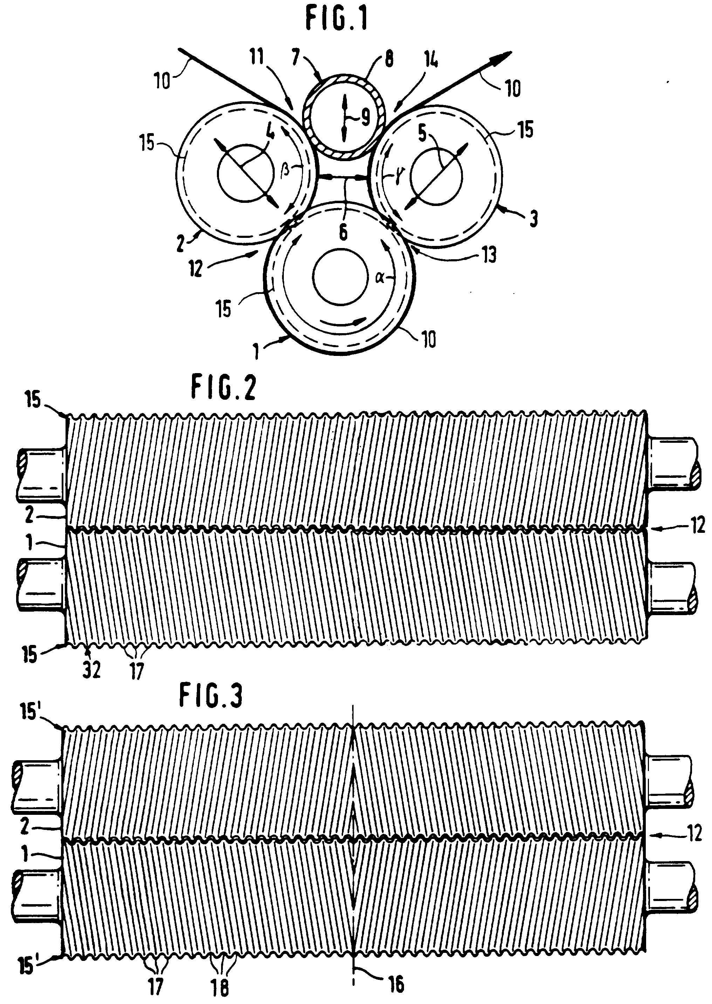

In Fig. 1 ist das Prinzip dargestellt. Die BreitdehnVorrichtung 100 umfaßt eine Profilwalze 1 sowie zwei in den oberen "Quadranten" der aus Fig. 1 ersichtlichen Ansicht der Profilwalze 1 etwa unter 45° auf gleicher Höhe mit parallelen Achsen angesetzte Gegenwalzen 2,3, die im Sinne der Pfeile 4,5 unabhängig voneinander gegen die Profilwalze 1 anstellbar sind. Die Gegenwalzen 2,3 belassen einen Abstand 6 voneinander, der kleiner ist als der Außendurchmesser einer von oben unter ihrem Eigengewicht und/oder äußeren Kräften auf den Gegenwalzen 2,3 aufsitzenden Andrückwalze 7, die im Sinne des Pfeiles 9 geführt ist.

Die Warenbahn 10 durchläuft in der aus Fig. 1 ersichtichen Weise mäanderförmig die Breitdehnvorrichtung 100, d.h. sie passiert zunächst den Walzspalt 11 zwischen der Gegenwalze 2 und der Andrückwalze 7, sodann den Dehnspalt 12 zwischen der Gegenwalze 2 und der Profilwalze 1; sie umrundet sodann den unteren Teil der Profilwalze 1 und passiert den Dehnspalt 13 zwischen der Gegenwalze 3 und der Profilwalze 1 und verläßt dann die Breitdehnvorrichtung 100 nach dem Durchlaufen des Walzspalts 14 zwischen der Gegenwalze 3 und der Andrückwalze 7. Zur Vermeidung von Bogenverzug ist die Warenbahn bei der Breitdehnvorrichtung 100 so geführt, daß der Umschlingungswinkeld auf der Profilwalze 1 gleich der Summe der Umschlingungswinkel β und γ auf den Gegenwalzen 2 und 3 ist.

Die Andrückwalze 7 liegt in dem Bereich, in welchem die einlaufende Warenbahn 10 auf der Gegenwalze 2 anliegt und bevor die Warenbahn 10 den Dehnspalt 12 erreicht hat, gegen die auf der Gegenwalze 2 abgestützte Warenbahn 10 von außen als Andrückelement an und hat einen relativ weichen (ca. 60 Shore D), am Außenumfang glatt zylindrischen Belag 8. Ebenso liegt die Andrückwalze 7 an der auf der Gegenwalze 3 geführen Warenbahn 10 in dem Bereich nach dem Verlassen des Dehnspalts 13 an.

Die Walzen 1,2,3 haben in dem Ausführungsbeispiel etwa gleichen Durchmesser und am Umfang ein gleichmäßiges Schraubenrelief 15, welches für die Walzen 1,2 anhand der Fig. 2 und 3 erläutert wird. Für die Walzen 1 und 3 gilt das Gesagte sinngemäß.

In dem Ausführungsbeispiel der Fig. 2 ist der Grundkörper der Walze im wesentlichen zylindrisch und sitzt das Schraubenrelief 15 in Gestalt einer den Walzenkörper umgebenden schraubenförmig verlaufenden Rippe 32 außen darauf. Die Arbeitsbreite der Walze beträgt etwa 2 m. Der Abstand der Schraubengänge, d.h. der axiale Abstand von Rippenscheitel zu Rippenscheitel, beträgt etwa 15 mm, so daß insgesamt etwa 130 Rippenscheitel auf die Länge der Walze kommen. Die Darstellung der Fig. 2 und 3 ist insoweit nicht maßstäblich.

Die Walzen 1 und 2 der Fig. 2 sind untereinander gleich ausgebildet, und es greifen die durch die Schraubengänze gebildeten Reliefs in der aus Fig. 2 ersichtlichen Weise ineinander. Die Walzen 1,2 sind drehgekoppelt und können gegeneinander drehen, ohne daß die Flanken des Schraubenreliefs 15 einander berühren. Der Dehnspalt 12 behält bei der Drehung der Walzen 1,2 seine wellenförmige Gestalt gleichbleibender Breite.

In Fig. 3 ist eine alternative Ausführungsform eines Schraubenreliefs 15' dargestellt. Von der zur Achse senkrechten Mittelebene 16 der Walzen 1,2 ausgehend besitzt der an sich zylindrische Walzenkörper Schraubengänge, wobei nach beiden Seiten hin die Steigung und die Scheitelhöhe S, d.h. der Radiusunterschied, zwischen den Scheiteln 17 und den Tälern 18 konstant sind, jedoch die Steigung der beiden Seiten unterschiedliche Vorzeichen hat, d.h. das Schraubenrelief 15' von der Mittelebene 16 ausgehend nach einer Seite hin ein Rechtsgewinde, nach der anderen Seite hin ein Linksgewinde darstellt. Die Reliefs 15' der gemäß Fig. 3 zusammenwirkenden Walzen 1,2 sind gleich und greifen in der aus Fig. 3 ersichtlichen Weise ineinander, indem die Scheitel des Reliefs der Walze 2 in die Täler des Reliefs der Walze 1 eintreten. Eine Berührung findet nicht statt, da sonst die in dem Zwischenraum geführte, in den Fig. 2 und 3 nicht dargestellte Warenbahn 10 zerstört würde.

Bei den Konstellationen nach den Fig. 2 und 3 können sich die Walzen 1,2 mit gleicher umfangsgeschwindigkeit gegeneinander drehen, wobei die Schraubenreliefs 15,15' eine Verlagerungsbewegung zur Seite hin ausführen, bei Fig. 2 in eine Richtung, bei Fig. 3 von der Mittelebene 16 aus nach beiden Richtungen. Bei dieser Verlagerungsbewegung verändert sich der Angriffspunkt der Scheitel der Reliefs an der Warenbahn 10 in Seitenrichtung. Der Sinn der schraubenförmigen Gestaltung des Reliefs liegt nur darin, Längsmarkierungen auf der Warenbahn zu vermeiden. Für die Breitendehnung ist die schraubenförmige Augestaltung der Reliefs 15,15' nicht von Bedeutung. Es erfolgt durch die Schraubenreliefs 15,15' auch kein Quertrangsport der Warenbahn 10.

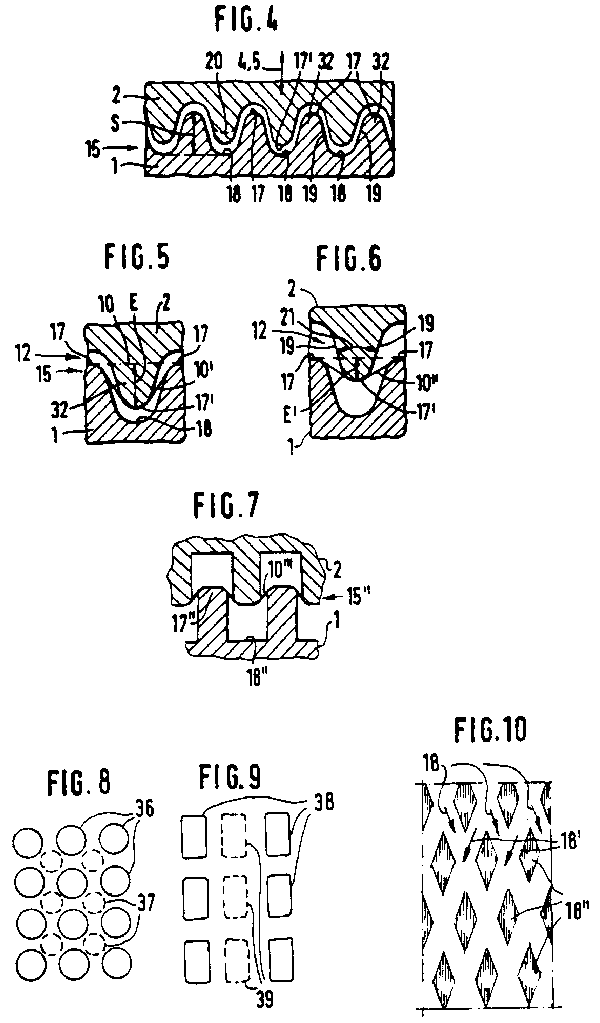

Für die Breitendehnung ist nur der gegenseitige Eingriff E,E' maßgeblich, wie es in den Fig. 4 bis 6 dargestellt ist.

Wenn die Warenbahn 10 ohne Gegenwalze über die Profilwalze 1 gemäß Fig. 5 geführt würde, läge sie auf den Scheiteln 17 des Schraubenprofils 15 (oder 15') auf, wie es durch die strichpunktierte Linie 10 in Fig. 5 angedeutet ist. Wird jetzt in dem Dehnspalt 12 die Gegenwalze 2 gegen die Profilwalze 1 angestellt und treten deren Scheitel 17', 17' in der in Fig. 5 wiedergegebenen Weise in die Täler 18 der Profilwalze 1 ein, so nimmt die Warenbahn 10 nicht mehr den strichpunktiert angedeuteten gedachten Verlauf 10, sondern den ausgezogen wiedergegebenen Verlauf 10', wobei die warenbahnstrecke in Breitenrichtung zwischen den Scheiteln 17,17 vergrößert ist, d.h. die Warenbahn 10 in Breitenrichtung zwischen den jeweiligen Scheiteln 17 eine Dehnung erfahren hat. Die Warenbahn 10 wird beim Eindringen der Scheitel 17' in die Täler 18 durch die Reibung auf den benachbarten Scheiteln 17 festgehalten, wodurch die Gegenkräfte zu den Dehnkräften entstehen. Wesentlich ist, daß die Dehnung zwischen je zwei durch die Scheitel 17 gegebenen Fix- oder Haltepunkten erfolgt, zwischen denen über die Länge der Walzen 1,2 bzw. die Warenbahnbreite größenordnungsmäßig hundert vorhanden sind.

Das Maß der Dehnung hängt von der Eindringtiefe E der Scheitel 17' ab. In Fig. 6 ist die Eindringtiefe E' des Scheitels 17 in das Tal 18 geringer als in Fig. 5 und nimmt die Warenbahn den Verlauf 10", der eine geringere Dehnung zwischen den Scheiteln 17 bedeutet.

In dem Ausführungsbeispiel der Fig. 4 bis 6 sind die Scheitel 17 und die Täler 18 in dem durch die Achse gehenden Längsschnitt durch Kreisbögen gebildet, die durch tantentiale Schrägflächen 19 miteinander verbunden sind. Der Winkel, den die verbindenden Schrägflächen 19 miteinander einschließen, ist in Fig. 5 mit 21 bezeichnet und beträgt dort ca. 40°. In Fig. 4 ist noch eine andere mögliche Ausführungsform beispielhaft angedeutet, bei der die Täler und Scheitel 20 durch unmittelbar ineinander übergehende Halbkreise gebildet sind. Auch Mischformen sind möglich. Die Radien der Täler 18 sind größer als die der zugehörigen Scheitel 20, weil zwischen den Walzen 1,2 auch bei maximaler Anstellung ein gewisser Zwischenraum verbleiben muß, in dem die Warenbahn sich aufhält. Eine Berührung der Reliefs der beiden zur Bildung des Dehnspalts 12 zusammenwirkenden Walzen 1,2 würde eine Zerstörung der Warenbahn 10 an der betreffenden Stelle zur Folge haben.

In Fig. 7 ist eine alternative Reliefausführung 15" angedeutet, bei der die Täler und die Rippen im wesentlichen rechteckigen Querschnitt in einer durch die Längsachse der Walze gehenden Ebene aufweisen, wobei die Rippen 17" schmäler sind als die Täler 18". Die Rippen 17" sind an den äußeren Kanten abgerundet, so daß die Warenbahn den angedeuteten Verlauf 10''' nimmt. Die durch die längeren Rechteckseiten gebildeten Flanken der Rippen stehen in dem Ausführungsbeispiel der Figuren senkrecht auf der Walzenachse.

Fig. 4 gibt etwa die natürliche Größe eines für eine übliche textile Warenbahn 10 in Betracht kommenden Schraubenreliefs wieder, bei welchem der Längsabstand der Scheitel 17 ca. 15 mm und die Scheitelhöhe S etwa 10 mm betragen und welches auf einer Walze von ca. 2 m Länge aufgebracht wird. Das Schraubenrelief kann in einen Walzenumfang aus korrosionsfestem Stahl eingedreht oder auch durch Wickeln eines entsprechend profilierten Drahtes auf einem zylindrischen Walzenkörper angebracht sein. Es ist aber auch möglich, das Schraubenrelief 15 in einem Walzenbelag aus Kunststoff anzubringen.

In Fig. 8 bis 10 sind Beispiele für Reliefs der Profilwalze 1 und der Gegenwalze 2 angedeutet, die keine in Umfangsrichtung durchgehenden Rippen aufweisen. Das Relief der Profilwalze 1 beinhaltet gemäß Fig. 8 vielmehr in Längsrichtung und in Umfangsrichtung in gerader Linie hintereinanderliegende Noppen kreisförmigen Grundrisses, in radialer Richtung gesehen, und etwa kegelförmiger Ausbildung, zwischen die entsprechende Noppen 37 (in Fig. 8 gestrichelt wiedergegeben) der Gegenwalze 2 eingreifen, und zwar so, daß immer ein Noppen 37 genau zwischen vier im Quadrat angeordnete Noppen 36 der Profilwalze 1 hineinpaßt. In Fig. 9 sind die Noppen 38 der Profilwalzel 1 mit den längeren Seiten in Umfangsrichtung in jeweils gleichen Querschnittsebenen orientiert. Die Noppen 38 verschiedener Querschnittsebenen liegen auf achsparallelen Geraden hintereinander. Die strichpunktiert angedeuteten Noppen 39 der Gegenwalze liegen, in Umfangsrichtung gesehen, jeweils zwischen zwei in Längsrichtung aufeinanderfolgenden Noppen 38 der Profilwalze 1. In Fig. 10 sind durch entsprechendes Einstechen von schraubenförmigen Nuten mit "Linksgewinde" Täler 18, mit "Rechtsgewinde" Täler 18' erzeugt worden, wodurch rautenförmige Inseln 18" stehenbleiben, die mit einer Gegenwalze mit komplementärem Relief, beispielsweise mit schraubenförmigem Relief, zusammenwirken können und dabei viele Zwischenräume für die Strömung eines fluiden Behandlungsmediums belassen.

Die Ausdrücke "Profilwalze" und "Gegenwalze" dienen nur der sprachlichen Unterscheidung der Walzen und bedeuten keinen funktionellen Unterschied; die zur Bildung des Dehnspaltes 12 zusammenwirkenden Walzen 1,2 sind untereinander gleich und austauschbar oder jedenfalls komplementär.

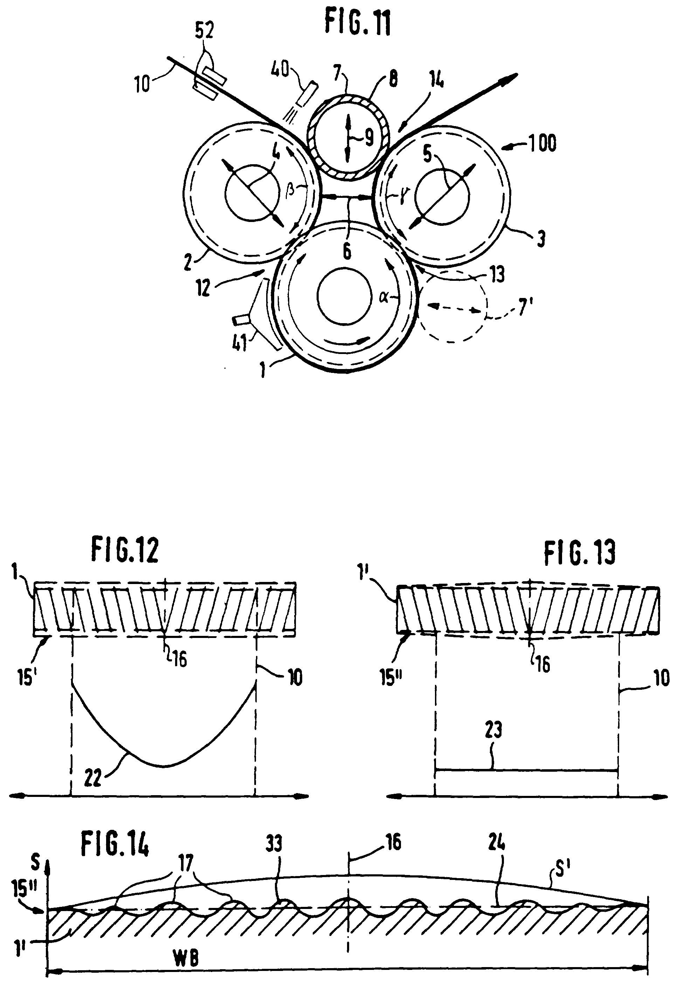

Bei der Ausführungsform nach Fig. 11 ist die Breitdehnvorrichtung 100 durch Sprüheinrichtungen 40,41 erweitert, mittels deren fluide Behandlungsmedien, beispielsweise Heißwasser oder Dampf, gegen die Warenbahn 10 gerichtet werden können. Die Sprüheinrichtung 40 umfaßt eine Düse, die gegen die auf der Gegenwalze 2 anliegende Warenbahn 10 an einer vor dem Andrückwalzspalt 11 gelegenen Stelle gerichtet ist. Die Sprüheinrichtung 41 ist eine Art Dampfhaube, die gegen die Profilwalze 1 an einer dem Dehnspalt 12 nachgeschalteten Stelle gerichtet ist und die Entspannung der Warenbahn 10 fördert.

Es kann sich empfehlen, eine zusätzliche Andrückwalze 7' an die Profilwalze 1 in dem von der Warenbahn 10 umschlungenen Bereich möglichst dicht vor Erreichen des zweiten Dehnspaltes 13 anzusetzen, wie es in Fig. 11 gestrichelt angedeutet ist.

Bei der Ausführungsform nach Fig. 11 ist auch noch eine Partieerkennungseinrichtung 52 angedeutet, die an der Warenbahn 10 angebrachte Kennzeichen erkennt und entsprechende Signale zur selbsttätigen Einstellung der Dehnspalte 12 und 13 abgibt.

Die Anstellung der Gegenwalzen entsprechend den Pfeilen 4 und 5 so erfolgen, daß die Eingriffstiefe E in dem zweiten Dehnspalt 13 größer ist als in dem ersten Dehnspalt 12, so daß die angestrebte End-Breitdehnung in zwei Stufen erfolgen kann.

In Fig. 12 ist eine Pofilwalze 1 dargestellt, bei der ein Schraubenprofil 15' entsprechend Fig. 3 vorhanden ist, welches abgesehen von der Änderung des Drehsinns an der Mittelebene 16 eine über die Breite gleichmäßige Ausbildung der einzelnen Schraubengänge mit gleichbleibender Scheitelhöhe S aufweist. Es sind in Fig. 12 die Ränder einer Warenbahn 10 gestrichelt angedeutet. Die Warenbahn 10 wird dort durch auf der Walze 1 und der Gegenwalze angeordnete elastische Ringe am Rand in Breitenrichtung fixiert. Es ist die beim Durchlaufen eines Dehnwalzspalts mit Walzen 1,2 dieser Art sich ergebende Dehnungsverteilung 22 über der jeweiligen Position in Breitenrichtung in Fig. 12 aufgetragen. Die Praxis zeigt, daß die erzeugte Dehnung in der Mitte ein Minimum aufweist und nach den Rändern hin etwa hyperbelförmig zunimmt. Eine solche Dehnugnsverteilung 22 ist in vielen Fällen nicht erwünscht, weil die mechanische Beanspruchung in den Bereichen höherer Dehnung entsprechend höher ist und beispielsweise auch das Aufnahmevermögen für Färbeflüssigkeit und dergleichen je nach einer an einer bestimmten Stelle vorliegenden Dehnung unterschiedlich sein kann, so daß sich bei der fertig behandelten Bahn Unterschiede in der Farbtontiefe bemerkbar machen.

Angestrebt wird eine Situation entsprechend Fig. 13, wo die Dehnungskurve 23 horizontal verläuft, d.h. an jeder Stelle der Warenbahn 10, in Breitenrichtung gesehen, die gleiche spezifische Dehnung vorliegt. Dies wird erreicht, indem die Scheitelhöhe S des Schraubenprofils 15" der Walze 1' der Fig. 13 nicht mehr wie in Fig. 12 konstant gewählt wird, sondern zu den Enden der Walze 1' hin stetig abnimmt, so daß sich ein Verlauf etwa nach Fig. 14 ergibt. Die darstellung der Fig. 14 ist ganz schematisch; es sind natürlich in Wirklichkeit wesentlich mehr Scheitel 17 vorhanden.

Die Teilung des Schraubenprofils 15" gemäß Fig. 13 ist zwar konstant, doch ist die Scheitelhöhe im Bereich der Mittelebene 16 am größten und nimmt nach beiden Seiten hin ab. Die Umfangsfläche 33 der Walze 1' pendelt also gewissermaßen um eine gedachte Zylinderfläche, die durch die strichpunktierte Gerade 24 angedeutet ist. Eine gegenüberstehende Gegenwalze, die gleich ausgebildet ist oder aber eine der größten Scheitelhöhe in Fig. 14 entsprechende Scheitelhöhe aufweist, erzielt also in der Mitte eine größere Eingriffstiefe als am Rand. Der Verlauf der Scheitelhöhe S über die Warenbahnbreite WB ist in Fig. 14 durch die Kurve S' angedeutet. Die Kurve S' kann aber auch anders verlaufen. In Fig. 13 besteht sie beispielsweise aus zwei zum Rand hin abfallenden Geraden. Die über die Länge unterschiedliche Eingriffstiefe kann auch bei zylindrischem Außenumfang der Gegenwalze erzielt werden. Ist jedoch der Außenumfang, wie in den Fig. 13 und 14, nicht zylindrisch, so muß die Andrückwalze sich entsprechend anschmiegen können, damit es zu einer über die Bahnbreite gleichmäßigen Andrückung kommt.

An den Rändern erfolgt durch die geringere Eingriffstiefe eine geringere Dehnung, in der Mitte eine stärkere Dehnung, so daß einem Kurvenverlauf 22 wie in Fig. 12 entgegengewirkt wird und sich im Idealfall die horizontale Dehnungsverteilung 23 der Fig. 13 einstellt.

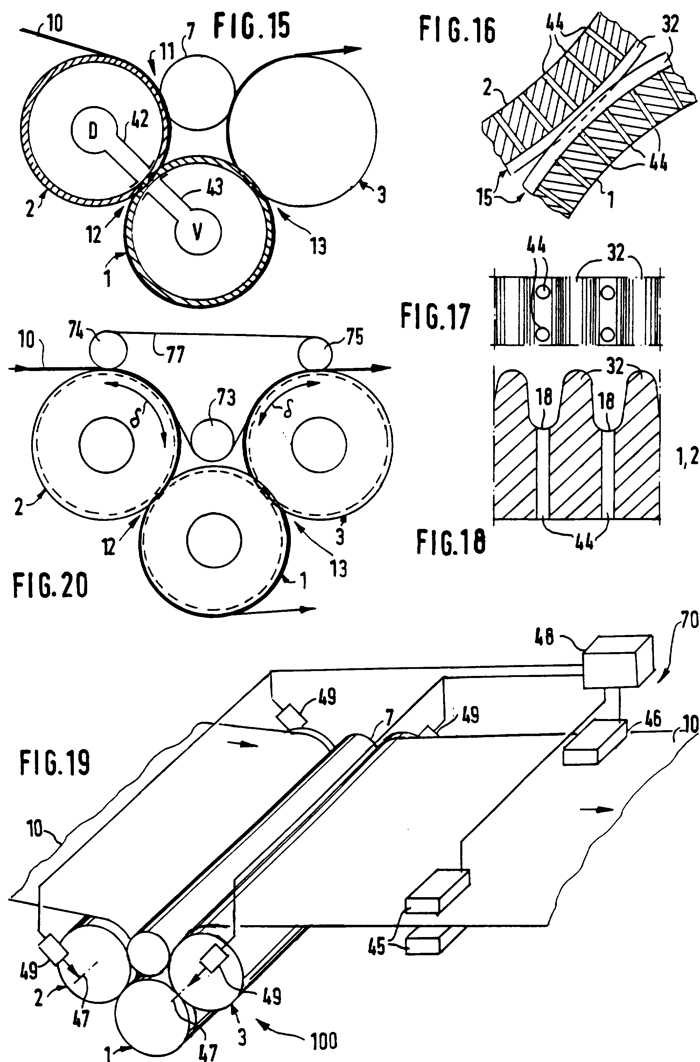

In den Fig. 15 bis 18 ist eine weitere Ausgestaltung der Breitdehnvorrichtung 100 mit den wesentlichen Elementen Profilwalze 1, Gegenwalzen 2,3 und an diesen anliegende Andrückwalze 7 wiedergegeben, bei der mindestens eine der zur Bildung des Dehnspalts 12 zusammenwirkenden Walzen 1,2 perforiert ist, so daß ein fluides Behandlungsmedium eingesaugt oder ausgeblasen werden kann. In Fig. 15 ist die Perforation zeichnerisch nicht wiedergegeben. Der Eingriffsbereich der Walzen 1,2 ist jedoch in Fig. 16 vergrößert dargestellt. Die das Relief 15 bildenden Rippen 32 der zusammenwirkenden Walzen 1,2 greifen ineinander. In dem dargestellten Ausführungsbeispiel sind in den Tälern zwischen den Rippen 32 in das Innere der Walze durchgehende Bohrungen 44 angebracht, durch die das fluide Behandlungsmedium vom Innern der Walze nach außen und umgekehrt übertreten kann. Die Bohrungen 44 sind gleichmäßig längs der Täler 18 verteilt.

In dem Ausführungsbeispiel der Fig. 15 ist im Innern der Gegenwalze 2 ein gegen den Dehnspalt 12 gerichteter undrehbarer, sich längs der Gegenwalze 2 erstreckender Kanal 42 vorgesehen, der in einem schmalen Umfangsbereich gegen den Innenumfang der Gegenwalze 2 mündet und an dessen Rändern abgedichtet ist. Der Kanal 42 steht mit einem Druckbereich D in Verbindung, und es kann Dampf oder Heißwasser oder dergleichen gegen den Innenumfang der Gegenwalze 2 gerichtet werden, von wo dieses Medium durch die Bohrungen 44 in den Dehnspalt 12 bzw. gegen die dort durchlaufende Warenbahn 10 austritt.

In der Profilwalze 1 ist ein entsprechender Kanal 43 angeordnet, dessen Mündung der Mündung des Kanals 42 gegenüberliegt und der mit einem Vakuumbereich V in Verbindung steht, so daß das durch den Kanal 42 herangeführte Medium durch die Warenbahn 10 hindurchgesaugt und durch die Perforationen 44 der Profilwalze 1 in den Vakuumbereich eingesaugt wird. Bei dieser Konfiguration erfolgt also gleichzeitig mit der Breitdehnung in dem Dehnspalt 12 eine intensive Durchströmung der Warenbahn 10 senkrecht zu ihrer Ebene.

Die Konstellation nach Fig. 15 ist aber nicht zwingend. Es kann auch nur einer der Kanäle 42,43 vorgesehen sein, und es muß dieser Kanal auch nicht gegen den Dehnspalt 12 gerichtet sein. Außerdem kann auch die Andrückwalze 7 mit einer Perforation und Mitteln zum Transport eines fluiden Behandlungsmediums vorgesehen sein. Auch können die Walzen 1,3 entsprechend ausgestattet sein.

In Fig. 19 ist das Zusammenwirken der Breitdehnvorrichtung 100 mit einer als Ganzes mit 70 bezeichneten Breitenregeleinrichtung dargestellt. Die Breitenregeleinrichtung 70 umfaßt zwei an den Rändern der Warenbahn 10, nachdem diese die Breitdehnvorrichtung 100 passiert hat, einander gegenüberliegend angeordnete Erfassungseinheiten 45,46, die in dem Ausführungsbeispiel als optische Einheiten mit jeweils einer senkrecht zur Warenbahnkante verlaufenden Diodenreihe angedeutet sind. Statt dessen könnten aber auch mechanische Fühler irgendwelcher Art oder ähnliche Einrichtungen eingesetzt werden. Die Signale der Erfassungseinheiten 45,46 gelangen in eine zentrale Regel- und Steuereinheit 48, wo daraus der Istwert der momentanen Breite der Bahn 10 gebildet wird. Anhand des Istwertes wird aufgrund eines vorgegebenen Sollwertes ein Steuersignal auf zwei Kraftausübungseinheiten 49 gegeben, die auf die nur angedeuteten Walzenzapfen 47 jeder Gegenwalze 2,3 wirken und diese im Sinne der Pfeile 4,5 (Fig. 1) gegen die Profilwalze 1 anstellen. Ist die Breite der Bahn 10 zu gering, wird die Eingriffstiefe E (Fig. 5) durch Erhöhung der Kraft an den Kraftausübungseinheiten 49 vergrößert. Auf diese Weise läßt sich eine vorgegebene Bahnbreite einhalten.

Die Steuerung der Dehnwirkung über die Eingriffstiefe E kann auch anders als in Fig. 19 dargestellt erfolgen. Es kann beispielsweise die Anstellung der Gegenwalzen 2,3 im Sinne der Pfeile 4,5 (Fig. 1) mittels Spindeltrieben bis zu einer vorgegebenen Eingriffstiefe E fest vorgenommen werden. Es kann aber auch mittels steuerbarer Kraftausübungseinheiten entweder eine bestimmte Kraft oder eine bestimmte Eingriffstiefe (ein bestimmter Eingriffsweg) geregelt aufrechterhalten werden.

Bei den bisherigen Ausführungsformen bestand das Andrückelement in einer Walze. In Fig. 20 ist eine Ausführungsform dargestellt, bei welcher das Andrückelement durch ein Umlenkband 77 gebildet ist, welches endlos über zu den Walzen 1,2,3 parallele Umlenkrollen 73,74,75 umläuft und an der Warenbahn 10 in Umschlingungsbereichen auf den Gegenwalzen 2,3 anliegt. Die hierbei vorhandene wesentlich größere Ausdehnung des Andrückbereichs, die durch den Umschlingungswinkel charakterisiert ist, ermöglicht mit geringeren radialen Anlagekräften eine wirksamere Fixierung der WArenbahn 10 auf den Gegenwalzen 2,3 in Breitenrichtung und ergibt eine dichte Hinterlagerung der Warenbahn 10 in einer ausgedehnten Zone, was bei der Behandlung mit fluiden Behandlungsmedien erwünscht sein kann. Alternativ kann aber auch das Andrückband 77 ebenso wie die Andrückwalze 7 ein gewisses eigenes Oberflächenrelief auf der der Warenbahn 10 zugewandten Seite sowie eine durchgehende Perforation aufweisen.

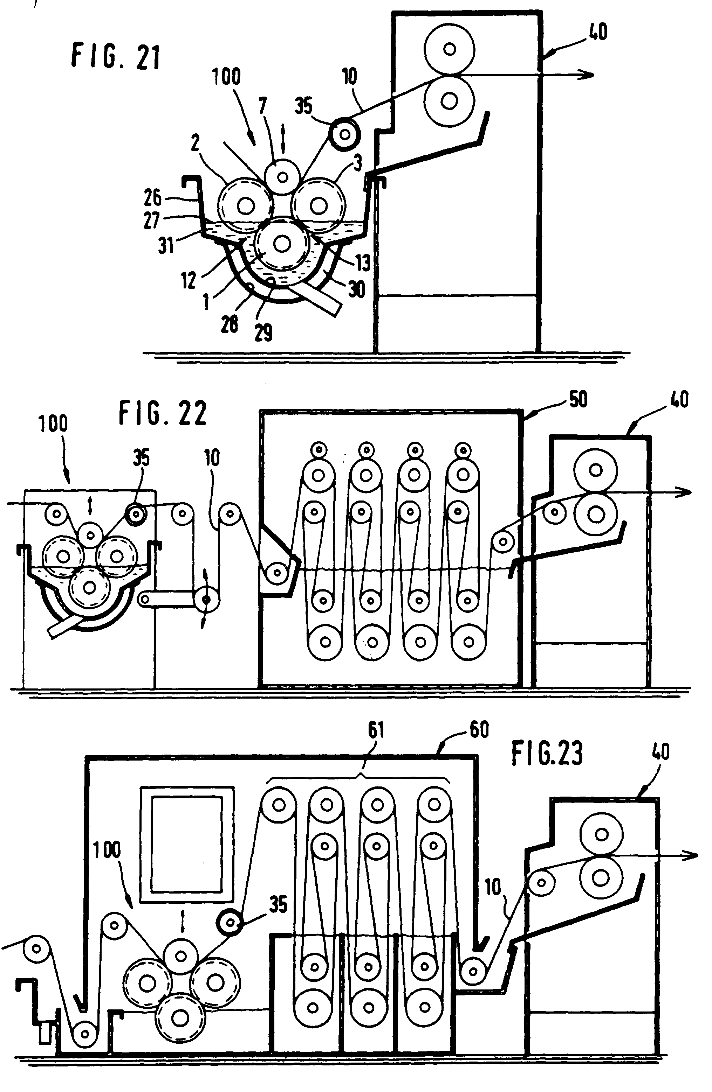

In den Fig. 21 bis 23 sind verschiedene Einsatzbeispiele der Breitdehnvorrichtung 100 wiedergegeben.

In Fig. 21 ist ersichtlich, daß die Walzen 1,2,3 mit ihrem unteren Teil in einen Flüssigkeitstrog 26 eintauchen, der bis zu einer Höhe 27 mit einer Behandlungsflüssigkeit 31 gefüllt ist und im unteren Bereich eine doppelte Wandung 28,29 aufweist, wobei in dem Zwischenraum 30 eine Wärmeträgerflüssigkeit zirkulieren gelassen wird, die die Behandlungsflüssigkeit indirekt heizt. Auf diese Weise erfährt die Warenbahn 10, wenn sie den unteren Teil der Profilwalze 1 umrundet, eine kurze Verweilzeit, in der sie mit der Behandlungsflüssigkeit getränkt wird.

Weiterhin ist aus den Fig. 21 bis 23 zu entnehmen, daß der Breitdehnvorrichtung 100 eine Breitstreckvorrichtung 35 unmittelbar nachgeschaltet ist, die die die Breitdehnvorrichtung 100 verlassende Warenbahn 10, die dann eine leichte Querkräuselung aufweist, in eine ebene Lage auseinanderzieht. Die nachgeschaltete Breitstreckvorrichtung 35 ist wichtig, um in nachgeschalteten Behandlungsstationen Laufprobleme und Faltenbildung zu unterbinden.

Die Breitdehnvorrichtung 100 der Fig. 21 ist einem als Ganzes mit 40 bezeichneten Quetschwerk vorgeschaltet, in welchem die Behandlungsflüssigkeit 31 abgequetscht wird.

In dem Ausführungsbeispiel der Fig. 22 ist die Breitdehnvorrichtung 100 einem Dämpfer 50 vorgeschaltet, dem seinerseits eine Quetschvorrichtung 40 nachgeschaltet ist.

In dem Ausführungsbeispiel der Fig. 23 ist die Breitdehnvorrichtung 100 in dem Gehäuse eines Dämpfers 60 angeordnet und schließt sich die eigentliche Verweilstrecke 61 in dem Dämpfer 60 an die Breitdehnvorrichtung 100 an. Nach dem Verlassen des Dämpfers 60 durchläuft die Warenbahn 10 wiederum ein Quetschwerk 40.

## Patentansprüche

1. Breitdehnvorrichtung (100,200) für kontinuierlich vorlaufende textile und ähnliche Warenbahnen (10),
mit einer umlaufenden Profilwalze (1), deren Umfang ein Relief (15,15',15") mit einer Vielzahl von über die Walzenlänge verteilten radialen Erhöhungen (17) und diesen jeweils benachbarten Vertiefungen (18) aufweist,
mit mindestens einer parallelen, mit gleicher Umfangsgeschwindigkeit umlaufenden, mit der Profilwalze (1) einen Dehnspalt (12) bildenden Gegenwalze (2), deren Umfang ein komplementäres Relief (15,15',15") aufweist, dessen Erhöhungen (17') berührungslos in die Vertiefungen (18) der Profilwalze (1) eingreifen,
und mit einem an der in den Dehnspalt (12) einlaufenden, die eine Walze (2) teilweise umschlingenden Warenbahn (10), dem Dehnspalt (12) so dicht wie möglich benachbart, von außen anliegenden Andrückelement (7,77), welches mit der Warenbahn (10) mit gleicher Umfangsgeschwindigkeit in Umfangsrichtung mitläuft und eine glatte Andrückfläche aufweist,
dadurch gekennzeichnet,
daß ein Paar von mit gleicher Umfangsgeschwindigkeit umlaufenden Gegenwalzen (2,3) mit komplementären Reliefs (15,15',15"), welche in das Relief (15,15',15") der Profilwalze (1) eingreifen, vorgesehen ist,
daß der Eingriff der zweiten Gegenwalze (3) an der Profilwalze (1) tiefer als der der ersten Gegenwalze (2) ist,
daß das glatte Andrückelement (7) einen Durchmesser aufweist, der größer als der Abstand (6) der Gegenwalzen (2,3) ist und von außen gegen beide Gegenwalzen (2,3) anliegt
und daß die Warenbahn (10) durch den Spalt (11) zwischen dem Andrückelement (7) und einer ersten Gegenwalze (2), durch den Dehnspalt (12) zwischen der Gegenwalze (2) und der Profilwalze (1), um die Profilwalze (1) herum, durch den Dehnspalt (13) zwischen der Profilwalze (1) und der zweiten Gegenwalze (3) und durch den Spalt zwischen dem Andrückelement (7) und der zweiten Gegenwalze (3) geführt ist.

2. Breitdehnvorrichtung nach Anspruch 1, dadurch gekennzeichnet, daß das Andrückelement (7,77) eine geschlossene Andrückfläche aufweist.

3. Breitdehnvorrichtung nach Anspruch 1 oder 2, dadurch gekennzeichnet, daß das Andrückelement (7,77) eine perforierte Andrückfläche aufweist.

4. Breitdehnvorrichtung nach einem der Ansprüche 1 bis 3, dadurch gekennzeichnet, daß das Andrückelement eine sich über die Länge der Gegenwalzen (2,3) erstreckende Andrückwalze (7) ist.

5. Breitdehnvorrichtung nach Anspruch 4, dadurch gekennzeichnet, daß die Andrückwalze (7) einen nachgiebigen Belag (8) mit einer Härte von 50 bis 70 Shore D aufweist.

6. Breitdehnvorrichtung nach Anspruch 4 oder 5, dadurch gekennzeichnet, daß die Andrückwalze (7) in Längenabschnitte geteilt ist und die Achsen der Längenabschnitte gegeneinander winkelbeweglich sind.

7. Breitdehnvorrichtung nach einem der Ansprüche 1 bis 3, dadurch gekennzeichent, daß das Andrückelement ein die Gegenwalzen (2,3) in einem Umschlingungsbereich δ umschlingendes, endlos umlaufendes, in der Breite den Gegenwalzen (2,3) entsprechendes Band (77) ist.

8. Breitdehnvorrichtung nach einem der Ansprüche 1 bis 7, dadurch gekennzeichnet, daß die Profilwalze (1) und die Gegenwalzen (2,3) ein Relief (15,15',15") mit über den Umfang durchgehenden Rippen (32) umfassen.

9. Breitdehnvorrichtung nach einem der Ansprüche 1 bis 7, dadurch gekennzeichnet, daß das Relief über die Walzenoberfläche gleichmäßig verteilte einzelne, in Längsund Umfangsrichtung Abstand voneinander aufweisende Erhöhungen in Gestalt von Noppen (36,37,38,39) oder Rauten (18") umfaßt.

10. Breitdehnvorrichtung nach einem der Ansprüche 1 bis 9, dadurch gekennzeichnet, daß die Scheitel (17) der Rippen bzw. Erhöhungen einen Abstand, in Längsrichtung der Walze (1,2,3) gesehen, von 5 bis 30 mm aufweisen.

11. Breitdehnvorrichtung nach einem der Ansprüche 1 bis 10, dadurch gekennzeichnet, daß die Scheitel (17) der Rippen bzw. Erhöhungen und die Gründe (18) der Vertiefungen jeweils auf einer gedachten Zylinderfläche liegen und derradiale Abstand der Zylinderflächen (Scheitelhöhe S) 5 bis 20 mm beträgt.

12. Breitdehnvorrichtung nach einem der Ansprüche 1 bis 11, dadurch gekennzeichnet, daß bei zusammenwirkenden Walzen (1,2,3) die Eingriffstiefe (E) der Erhöhungen und Vertiefungen von der Mittelebene (16) aus nach den Seiten hin abnimmt.

13. Breitdehnvorrichtung nach Anspruch 12, dadurch gekennzeichnet, daß die Scheitel (17) der Erhöhungen auf einer Rotationsfläche liegen, die zu der zur Achse senkrechten Mittelebene (16) spiegelsymmetrisch ist und deren Radius von den Enden zu der Mittelebene (16) hin stetig ansteigt.

14. Breitdehnvorrichtung nach einem der Ansprüche 1 bis 13, dadurch gekennzeichnet, daß in der Nähe des Dehnspalts (12,13) eine Einrichtung (40,41) zum Aufbringen eines fluiden Behandlungsmediums auf die Warenbahn (10) vorgesehen ist.

15. Breitdehnvorrichtung nach einem der Ansprüche 1 bis 14, dadurch gekennzeichnet, daß in der Nähe des Dehnspalts (12) eine Einrichtung (43) zum Hindurchsaugen eines fluiden Behandlungsmediums durch die Warenbahn (10) vorgesehen sit.

16. Breitdehnvorrichtung nach einem der Ansprüche 1 bis 15, dadurch gekennzeichnet, daß mindestens eine der den Dehnspalt (12) bildenden Walzen (1,2) perforiert und das Walzeninnere mit einer Einrichtung zum Ausblasen (42) oder Einsaugen (43) eines fluiden Behandlungsmediums verbunden ist.

17. Breitdehnvorrichtung nach Anspruch 16, dadurch gekennzeichnet, daß eine (2) der den Dehnspalt (12) bildenden Walzen (1,2) mit einer gegen den Dehnspalt (12) gerichteten Einrichtung (42) zum Ausblasen, die andere (1) mit einer gegen den Dehnspalt (12) gerichteten Einrichtung (43) zum Einsaugen eines fluiden Behandlungsmediums verbunden ist.

18. Breitdehnvorrichtung nach einem der Ansprüche 1 bis 17, dadurch gekennzeichnet, daß der Umschlingungswinkel (α) an der Profilwalze (1) gleich der Summe der Umschlingungswinkel (β,γ) an den Gegenwalzen (2,3) ist.

19. Breitdehnvorrichtung nach einem der Ansprüche 1 bis 18, dadurch gekennzeichnet, daß zumindest die Profilwalze (1) zumindest teilweise in eine Behandlungsflüssigkeit (31) eintaucht.

20. Breitdehnvorrichtung nach einem der Ansprüche 1 bis 19, dadurch gekennzeichnet, daß die Walzen (1,2,3) auf eine bestimmte Eingriffstiefe (E) fest einstellbar sind.

21. Breitdehnvorrichtung nach einem der Ansprüche 1 bis 19, dadurch gekennzeichnet, daß die Walzen (1,2,3) auf eine bestimmte Eingriffskraft regelbar sind.

22. Breitdehnvorrichtung nach einem der Ansprüche 1 bis 21, dadurch gekennzeichnet, daß ihr eine Partieerkennungseinrichtung (52) zugeordnet ist, die auf am Anfang und/oder Ende eines Bahnabschnittes angebrachte Kennzeichnungen anspricht und mittels derer die Einstellung der Walzen (1,2,3) steuerbar ist.

23. Breitdehnvorrichtung nach einem der Ansprüche 1 bis 22, dadurch gekennzeichnet, daß ihr eine Breitenmeßvorrichtung (45,46) für die laufende Warenbahn (10) zugeordnet ist, die mit einer Regeleinrichtung (48) für den Eingriff der Walzen (1,2) verbunden ist.

24. Breitdehnvorrichtung nach einem der Ansprüche 1 bis 23, dadurch gekennzeichnet, daß ihr eine Breitstreckvorrichtung (35) unmittelbar nachgeschaltet ist.

25. Breitdehnvorrichtung nach einem der Ansprüche 1 bis 24, dadurch gekennzeichnet, daß sie einem Quetschwerk (40) vorgeschaltet ist.

26. Breitdehnvorrichtung nach einem der Ansprüche 1 bis 25, dadurch gekennzeichnet, daß sie einem Dämpfer (50) außerhalb dessen Gehäuses vorgeschaltet ist.

27. Breitdehnvorrichtung nach einem der Ansprüche 1 bis 25, dadurch gekennzeichnet, daß sie in einem Dämpfer (60) der eigentlichen Verweilstrecke (61) vorgeschaltet ist.

## Claims

1. A width-stretching device (100, 200) for continuously moving textile and similar material webs (10),
having a rotating profiled roll (1) whose periphery has a relief (15, 15', 15") having a number of radial protuberances (17) distributed over roll length and formed with recesses (18) adjacent each protuberance,
having at least one parallel mating roll (2) rotating at the same peripheral speed and co-operating with the profiled roll (1) to define a stretching nip (12), the periphery of the mating roll (2) having a complementary relief (15, 15', 15") whose protuberances (17') engage without contact in the recesses (18) of the profiled roll (1), and
having a biasing element (7, 77) which contacts the outside of the web (10) entering the stretching nip (12) and wrapping to some extent around a roll (2) and which is very close to such nip (12) and which runs at the same peripheral speed in the peripheral direction as the web (10) and has a smooth biasing surface,
characterised in that
a pair of mating rolls (2, 3) which run at the same peripheral speed and which have complementary reliefs (15, 15', 15") engaging in the profiled roll relief (15, 15', 15") are provided,
the engagement of the second mating roll (3) with the profiled roll (1) is deeper than the engagement of the first mating roll (2),
the smooth biasing-element (7) has a diameter which is larger than the distance (6) between the mating rolls (2, 3) and engages both the mating rolls (2, 3) externally, and
the web (10) is guided through the nip (11) between the biasing element (7) and a first mating roll (2), through the nip (12) between the mating roll (2) and the profiled roll (1), therearound, through the stretching nip (13) between the profiled roll (1) and the second mating roll (3) and through the nip between the biasing element (7) and the second mating roll (3).

2. A device according to claim 1, characterised in that the biasing element (7, 77) has a closed biasing surface.

3. A device according to claim 1 or 2, characterised in that the biasing element (7, 77) has a perforate biasing surface.

4. A device according to any one of claims 1 to 3, characterised in that the biasing element is a biasing roll extending over the length of the mating rolls (2, 3).

5. A device according to claim 4, characterised in that the biasing roll (7) has a resilient covering (8) having a hardness of from 50 to 70 Shore D.

6. A device according to claim 4 or 5, characterised in that the biasing roll (7) is divided into longitudinal parts and the axes thereof are angularly movable relatively to one another.

7. A device according to any one of claims 1 to 3, characterised in that the biasing element is an endlessly rotating belt (77) which corresponds in width to the mating rolls (2, 3) and wraps therearound in a wrapping zone δ.

8. A device according to any one of claims 1 to 7, characterised in that the profiled roll (1) and the mating rolls (2, 3) have a relief (15, 15', 15") with ribs (32) which are continuous over the periphery.

9. A device according to any one of claims 1 to 7, characterised in that the relief comprises individual protuberances, in the form of knops (36 - 39) or lozenges (18'), which are distributed uniformly over the roll surface and are spaced apart from one another lengthwise and in the peripheral direction.

10. A device according to any one of claims 1 to 9, characterised in that the crests (17) of the ribs or protuberances are separated from one another by a distance, seen lengthwise of the rolls (1, 2, 3), of from 5 to 30 mm.

11. A device according to any one of claims 1 to 10, characterised in that the crests (17) of the ribs or protuberances and the troughs (18) of the recesses all lie on an imaginary cylinder surface and the radial distance between the cylinder surfaces (crest height S) is from 5 to 20 mm.

12. A device according to any one of claims 1 to 11, characterised in that in the case of the co-operating rolls (1, 2, 3) the engagement depth (E) of the protuberances and recesses decreases from the centre-plane (16) towards the sides.

13. A device according to claim 12, characterised in that the crests (17) of the protuberances are disposed on a surface of rotation which is in mirror image symmetry with the centre-plane (16) perpendicular to the axis and whose radius increases continuously from the ends towards the centre plane (16).

14. A device according to any one of claims 1 to 11, characterised in that means (40, 41) for applying a fluid treatment medium to the web (10) are disposed near the stretching nip (12, 13).

15. A device according to any one of claims 1 to 14, characterised in that means (43) for sucking a fluid treatment medium through the web (10) are provided near the stretching nip (12).

16. A device according to any one of claims 1 to 15, characterised in that at least one of the rolls (1, 2) defining the stretching nip (12) is perforate and the roll interior is connected to means for ejecting (42) or intaking (43) a fluid treatment medium.

17. A device according to claim 16, characterised in that one (2) of the rolls (1, 2) defining the stretching nip (12) is connected to means (42) directed towards the stretching nip (12) and adapted to eject a fluid treatment medium while the other roll (1) is connected to means (43) directed towards the stretching nip (12) and adapted to intake a fluid treatment agent.

18. A device according to any one of claims 1 to 17, characterised in that the wrap angle (α) on the profiled roll (1) is equal to the sum of the wrap angles (β,γ) on the mating rolls (2, 3).

19. A device according to any one of claims 1 to 18, characterised in that at least the profiled roll (1) dips at least to some extent into a treatment liquid (31).

20. A device according to any one of claims 1 to 19, characterised in that the rolls (1, 2, 3) are fixedly adjustable to a predetermined engagement depth (E).

21. A device according to any one of claims 1 to 19, characterised in that the rolls (1 - 3) are adjustable to a predetermined engagement force.

22. A device according to any one of claims 1 to 21, characterised in that there is associated with it a batch identification facility (52) which responds to markings at the start and/or end of a web part and which is adapted to control the adjustment of the rolls (1 - 3).

23. A device according to any one of claims 1 to 22, characterised in that it is associated with means (45, 46) for measuring the width of the moving web (10) and such means are connected to means (48) for adjusting the engagement of the rolls (1, 2).

24. A device according to any one of claims 1 to 23, characterised in that a tentering frame (35) is provided immediately after the width-stretching device.

25. A device according to any one of claims 1 to 24, characterised in that it precedes a squeezing mechanism (40).

26. A device according to any one of claims 1 to 25, characterised in that it precedes a steam box (50) outside the casing thereof.

27. A device according to any of claims 1 to 25, characterised in that it precedes the actual residence zone (61) in a steam box (60).

## Revendications

1. Dispositif élargisseur (100, 200) pour traiter en continu des bandes (10) de tissus ou matériaux analogues comportant :
- un rouleau profilé (1) tournant, portant périphériquement un relief (15, 15', 15") constitué d'une multitude de protubérances (17) réparties sur la longueur du rouleau et contiguës à des parties en creux (18),
- au moins un contre-rouleau (2) tournant à la même vitesse périphérique que le rouleau profilé (1) en formant avec celui-ci une fente d'extension (12) et portant à sa périphérie un relief complémentaire (15, 15', 15") dont les protubérances (17') sont engagées sans contact dans les parties en creux (18) du rouleau profilé (1),
- un élément d'appui (7, 77) appliqué par l'extérieur sur la bande (10) entrant dans la fente d'extension (12) en enveloppant une partie d'un contre rouleau (2) cet élément d'appui placé le plus près possible de la fente (12), est entraîné par la bande (10) à la même vitesse périphérique et présente une surface d'appui lisse, ce dispositif présentant les caractéristiques suivantes;
- il comporte deux contre-rouleaux (2, 3) tournant à la même vitesse périphérique et portant des reliefs complémentaires (15, 15', 15") engagés dans le relief (15, 15', 15") du rouleau profilé (1),
- l'engagement du second contre-rouleau (3) dans le rouleau profilé (1) est plus profond que celui du premier contre-rouleau (2),
- l'élément lisse d'appui (7) a un diamètre supérieur à l'intervalle (6) séparant les contre-rouleaux (2, 3) et s'appuie extérieurement sur les deux contre-rouleaux,
- la bande de tissu (10) se déplace en traversant la fente (11) entre l'élément de pression (7) et un premier contre rouleau (2), la fente d'extension (12) entre le contre-rouleau (2) et le rouleau profilé (1), puis suit le rouleau profilé (1) pour traverser ensuite la fente d'extension (13) entre le rouleau profilé (1) et le second contre-rouleau (3) et enfin la fente entre l'élément de pression (7) et le second contre-rouleau (3).

2. Elargisseur selon la revendication 1, caractérisé en ce que l'élément d'appui (7, 77) a une surface d'appui fermée.

3. Elargisseur selon la revendication 1 ou 2, caractérisé en ce que l'élément d'appui a une surface d'appui perforée.

4. Elargisseur selon une des revendications 1 à 3, caractérisé en ce que l'élément d'appui est un rouleau (7) occupant toute la longueur des contre-rouleaux (2, 3).

5. Elargisseur selon la revendication 4, caractérisé en ce que le rouleau d'appui (7) porte un revêtement souple (8) d'une dureté de 50 à 70 Shore D.

6. Elargisseur selon la revendication 4 ou 5, caractérisé en ce que le rouleau d'appui (7) se compose de sections longitudinales dont les axes peuvent se déplacer angulairement les uns par rapport aux autres.

7. Elargisseur selon une des revendications 1 à 3, caractérisé en ce que l'élément d'appui est constitué par une bande sans fin (77) enveloppant les contre-rouleaux (2, 3) le long d'un secteur angulaire δ et présentant une largeur correspondant à celle des contre-rouleaux.

8. Elargisseur selon un des revendications 1 à 7, caractérisé en ce que le rouleau profilé (1) et les contre-rouleaux (2, 3) présentent un relief (15, 15', 15") comportant des nervures (32) périphériques continues.

9. Elargisseur selon une des revendications 1 à 7, caractérisé en ce que le relief est constitué de protubérances régulièrement distribuées, espacées longitudinalement et périphériquement sous forme de boutons circulaires (36, 37, 38, 39) ou de losanges (18").

10. Elargisseur selon une des revendication 1 à 9, caractérisé en ce que les crêtes (17) des nervures ou les protubérances présentent entre elles un espacement selon la direction longitudinale des rouleaux (1, 2, 3), de 5 à 30 mm.

11. Elargisseur selon une des revendications 1 à 10, caractérisé en ce que les crêtes (17) des nervures ou les protubérances ainsi que les fonds (18) des parties en creux se trouvent respectivement sur des surfaces cylindriques idéales dont l'espacement radial (hauteur de crête 5) est de 5 à 20 mm.

12. Elargisseur selon une des revendication 1 à 11, caractérisé en ce que la profondeur d'engagement (E) des protubérances et des parties en creux des rouleaux en prise (1, 2, 3) va décroissant au plan médian (16) vers chacun des côtés.

13. Elargisseur selon la revendication 12, caractérisé en ce que les crêtes (17) des protubérances sont situées sur une surface de révolution symétrique par rapport au plan médian (16) perpendiculaire à l'axe et dont le rayon croît régulièrement des extrémités vers le plan médian (16).

14. Elargisseur selon une des revendications 1 à 13, caractérisé en ce qu'il comporte, près de la fente d'extension (12, 13) un dispositif (40, 41) d'amenée d'un fluide de traitement sur la bande de tissu (10).

15. Elargisseur selon une des revendications 1 à 13, caractérisé en ce qu'il comporte, près de la fente d'extension (12), un dispositif (43) d'aspiration d'un fluide de traitement à travers la bande de tissu (10).

16. Elargisseur selon une des revendications 1 à 15, caractérisé en ce qu'au moins un des rouleaux (1, 2) délimitant la fente d'extension (12) est perforé et a son intérieur relié à un dispositif de soufflage (42) ou d'aspiration (43) d'un fluide de traitement.

17. Elargisseur selon la revendication 16, caractérisé en ce que l'un (2) des rouleaux (1, 2) formant la fente d'extension (12) est relié à un dispositif (42) dirigé vers la fente pour souffler, tandis que l'autre rouleau (1) est relié à un dispositif (43) pour aspirer un fluide de traitement.

18. Elargisseur selon une des revendications 1 à 15, caractérisé en ce que l'angle d'enroulement (α) sur le rouleau profilé (1) est égal à la somme des angles d'enroulement (β, γ) sur les contre-rouleaux (2, 3).

19. Elargisseur selon une des revendication 1 à 18, caractérisé en ce qu'au moins le rouleau profilé (1) baigne partiellement dans un liquide de traitement (31).

20. Elargisseur selon une des revendications 1 à 19, caractérisé en ce que les rouleaux (1, 2, 3) peuvent être fixés, par réglage à une profondeur d'engagement définie (E).

21. Elargisseur selon une des revendications 1 à 19, caractérisé en ce que les rouleaux (1, 2, 3) peuvent être réglés sur une force d'engagement définie.

22. Elargisseur selon une des revendications 1 à 21, caractérisé en ce qu'il lui est associé un dispositif de reconnaissance de lots (52) réagissant à des marques disposées au début et/ou à la fin d'une section de bande de manière à commander le réglage des rouleaux (1, 2, 3).

23. Elargisseur selon une des revendications 1 à 22, caractérisé en ce qu'il lui est associé un dispositif d'extension en largeur(45, 46) de mesure de la largeur de la bande (10) circulante, relié à un dispositif (48) de régulation de l'engagement des rouleaux (1, 2).

24. Elargisseur selon une des revendications 1 à 23, caractérisé en ce qu'un dispositif d'extension en largeur (35) lui est associé directement en aval.

25. Elargisseur selon une des revendications 1 à 24, caractérisé en ce qu'il est placé en amont d'un dispositif d'essorage (40) .

26. Elargisseur selon une des revendications 1 à 25, caractérisé en ce qu'il est placé en amont d'un vaporiseur (50), à l'extérieur du boîtier de celui-ci.

27. Elargisseur selon une des revendications 1 à 25, caractérisé en ce qu'il est placé à l'intérieur d'un vaporiseur (60), en amont du circuit de passage (61) de celui-ci.
